# EUROPÄISCHE PATENTSCHRIFT

(11) **EP 1 684 007 B1**
(45) Veröffentlichungstag und Bekanntmachung des Hinweises auf die Patenterteilung: **23.04.2008**
(21) Anmeldenummer: 06100358.8
(22) Anmeldetag: 16.01.2006
(51) Int. Cl.: F21V 17/00

(54) **Projektionsscheinwerfer für Fahrzeuge**
Vehicle headlamp projector
Projecteur pour véhicules

(30) Priorität: 20.01.2005 DE 102005002685
(43) Veröffentlichungstag der Anmeldung: 26.07.2006
(73) Patentinhaber: Hella KGaA Hueck & Co., 59552 Lippstadt (DE)
(72) Erfinder: Dikau, Reinhard, 33104 Paderborn (DE); Korff, Detlef, 59557 Lippstadt (DE); Krasenbrink, Christian, 59555 Lippstadt (DE); Rotgeri, Gerhard, 59590 Geseke (DE)

(56) Entgegenhaltungen:
- EP-A- 1 529 685
- EP-A2- 1 059 200
- EP-A2- 1 286 108

## Beschreibung

Die Erfindung betrifft einen Projektionsscheinwerfer für Fahrzeuge mit einem Reflektor, mit einer dem Reflektor zugeordneten Lichtquelle, mit einer dem Reflektor in Abstrahlrichtung vorgelagerten Linse, mit einer zwischen der Lichtquelle und der Linse angeordneten und die Hell/Dunkel-Grenze erzeugenden Blende und mit einem die Linse tragenden Linsenhalter enthaltend einen die Linse in Umfangsrichtung umgebenden Halterahmen und mindestens eine in Richtung des Reflektors weisende, von dem Halterahmen abragende Abstandshalteeinrichtung.

Aus der EP 0 936 402 A1 ist ein Projektionsscheinwerfer für Fahrzeuge bekannt, der im Wesentlichen aus einem Reflektor, einer Lichtquelle, einer dem Reflektor in Abstrahlrichtung vorgelagerten Linse und einer die Hell/Dunkel-Grenze erzeugenden Blende besteht. Die Linse ist an einem ringförmigen Linsenhalter befestigt, der zum einen über einen radialen Ringabschnitt zur Anbindung an den rückseitigen Reflektor und zum anderen über einen axialen Ringabschnitt verfügt, mit dem die Linse durch Bajonettverschluss verbunden ist.

Aus der DE 102 54 048 A1 ist ein Projektionsscheinwerfer für Fahrzeuge bekannt, der neben einem Reflektor, einer Lichtquelle, einer Linse und einer Blende über einen zylindrischen Linsenhalter verfügt. Ein hinterer kreisförmiger Rand des Linsenhalters ist in einem Klebebett des rückseitig angeordneten Reflektors gelagert.

Aus der DE 101 25 462 A1 ist ein Projektionsscheinwerfer für Fahrzeuge mit einem Reflektor, einer Lichtquelle, einer Linse, einer Blende und einem Linsenhalter bekannt. Der Linsenhalter umfasst zum einen einen die Linse in Umfangsrichtung umgebenden Halterahmen. Zum anderen umfasst der Linsenhalter eine Abstandshalteeinrichtung, die sich von dem Halterahmen entgegen der Lichtabstrahlrichtung zur Anbindung an den Reflektor erstreckt. Die Abstandhalteeinrichtung umfasst mehrere Abstandshaltearme, die in einem vorgegebenen Abstand in Umfangsrichtung verteilt angeordnet sind. Maßnahmen zur Verbesserung des Fußgängerschutzes sind nicht vorgesehen.

Aus der EP 1 059 200 A ist ein Projektionsscheinwerfer bekannt der für verbesserten Fussgängerschutz ausgelegt ist. Der Projektionsscheinwerfer enthält einen Reflektor, eine Blende und eine Linse mit Halterahmen und Abstandshalteeinrichtung.

Aufgabe der vorliegenden Erfindung ist es, einen Projektionsscheinwerfer für Fahrzeuge derart weiterzubilden, dass der Fußgängerschutz verbessert, wobei die vom Fußgänger ausgehende Stoßenergie durch Verformung mit einem vergrößerten Deformationsweg umgewandelt wird.

Zur Lösung dieser Aufgabe ist der erfindungsgemäße Projektionsscheinwerfer in Verbindung mit dem Oberbegriff des Patentanspruchs 1 dadurch gekennzeichnet, dass die Abstandshalteeinrichtung in einem vorgegebenen oberen Öffnungswinkelbereich eine obere Freimachung aufweist, derart, dass der Halterahmen bei einer Stoßbeanspruchung aus einer vorderen, in einem spitzen Winkel zu einer optischen Achse stehenden Stoßrichtung im Wesentlichen in Verlängerung der Stoßrichtung verformbar ist.

Der besondere Vorteil des erfindungsgemäßen Projektionsscheinwerfers besteht darin, dass durch Vorsehen einer Freimachung entlang eines vorgegebenen oberen Öffnungswinkelbereiches die Verformung des Linsenhalters bei Vorliegen eines Stoßes aus einer vorderen, oberhalb der optischen Achse verlaufenden Richtung erleichtert und damit besonders vorteilhaft die Stoßenergie abgebaut wird. Hierdurch kann das Verletzungsrisiko eines Fußgängers wesentlich verringert werden. Durch die erfindungsgemäße Freimachung wird Raum geschaffen, der eine fußgängergerechte Verformung des Linsenhalters im Aufprallfall ermöglicht. Insbesondere ermöglicht die obere Freimachung ein Verbiegen des Linsenhalters um eine senkrecht zur optischen Achse stehende Verschwenkachse.

Nach einer Weiterbildung der Erfindung erstreckt sich die obere Freimachung in einem stumpfen oder überstumpfen Öffnungswinkelbereich, so dass ein ausreichender Raum für die Verbiegung des Linsenhalters im Aufprallfall gegeben ist.

Nach einer Weiterbildung der Erfindung umfasst die Abstandshalteeinrichtung neben einer oberen Freimachung auch eine untere Freimachung, die sich unterhalb einer horizontalen Mittelebene der Linse erstreckt. Durch die untere Freimachung wird die gezielte Deformationsbewegung (Verbiegung) des Linsenhalters im Aufprallfall begünstigt.

Nach einer Weiterbildung der Erfindung weist die Abstandshalteeinrichtung einen ersten Abstandshaltearm und einen zweiten Abstandshaltearm auf, durch die jeweils die horizontale Mittelebene der Linse verläuft. Die Breite der Abstandshaltearme ermöglicht eine stabile und sichere Befestigung der Linse an einem rückwärtigen Haltebauteil (Reflektor). Vorzugsweise erstrecken sich die Abstandshaltearme mit einem hauptsächlichen Abschnitt unterhalb der horizontalen Mittelebene der Linse, so dass bei einem Aufprall vorzugsweise eine Verschwenkbewegung eines oberen Abschnitts des Halterahmens nach hinten erfolgt.

Nach einer Weiterbildung der Erfindung ist zumindest eine obere Randkontur des ersten Abstandshaltearmes und/oder des zweiten Abstandshaltearmes konkavförmig ausgebildet, so dass eine gezielte Einknickbewegung des Halterahmens im Aufprallfall gewährleistet ist.

Nach einer Weiterbildung der Erfindung weisen der erste und/oder zweite Abstandshaltearm auf einer dem Halterahmen abgewandten Seite jeweils einen Befestigungsflansch auf zur Befestigung an dem rückwärtigen Haltebauteil. Die Befestigungsflansche sind derart ausgebildet, dass ein Öffnungswinkelbereich derselben kleiner ausgebildet als der Öffnungswinkelbereich der oberen Freimachung, so dass hierdurch die Anbindungsfläche an dem Reflektor vergrößert sein kann. Die Länge der Befestigungsflansche ist größer als die Breite der Abstandshaltearme, so dass eine stabile Halterung der Linse durch Anbindung an den rückwärtigen Reflektor gewährleistet ist.

Nach einer Weiterbildung der Erfindung ist die Linse in dem Halterahmen derart gelagert, dass bei Erreichen einer vorgegebenen Stoßkraft die Linse aus dem Halterahmen selbsttätig herausbewegt und in den rückwärtigen Bereich bewegbar ist. Diese Linsenbefestigung kann daher ebenfalls Stoßenergie aufnehmen, wobei in einer zeitlich späteren Stufe die Stoßenergie durch Deformation des Halterahmens aufgenommen wird.

Ausführungsbeispiele der Erfindung werden nachfolgend anhand der Zeichnungen näher erläutert.

Es zeigen:
- Figur 1: eine Explosionsdarstellung einer Linsenhalterung enthaltend einen Linsenhalter und einen Sprengring nach einer ersten Ausführungsform des Linsenhalters,
- Figur 2: eine Seitenansicht des Linsenhalters nach der ersten Ausführungsform,
- Figur 3: eine Vorderansicht des Linsenhalters nach der ersten Ausführungsform,
- Figur 4: eine Seitenansicht eines Linsenhaltes nach einer zweiten Ausführungsform,
- Figur 5: eine Vorderansicht des Linsenhalters nach der zweiten Ausführungsform und
- Figur 6: eine perspektivische Vorderansicht des Linsenhalters nach der zweiten Ausführungsform.

Ein Projektionsscheinwerfer für Fahrzeuge besteht im Wesentlichen aus einem Reflektor, einer Lichtquelle, einer Blende und einer Linse 1, wie es beispielsweise aus der DE 101 25 462 A1 bekannt ist. Die Lichtquelle ist üblicher Weise in einem ersten Brennpunkt des ellipsoidförmigen Reflektors, die Blende in einem zweiten Brennpunkt des Reflektors angeordnet. Die Blende weist eine die Hell/Dunkel-Grenze einer Lichtverteilung erzeugende Kante auf, so dass beispielsweise eine Abblendlicht- bzw. Fernlichtverteilung abgebildet wird.

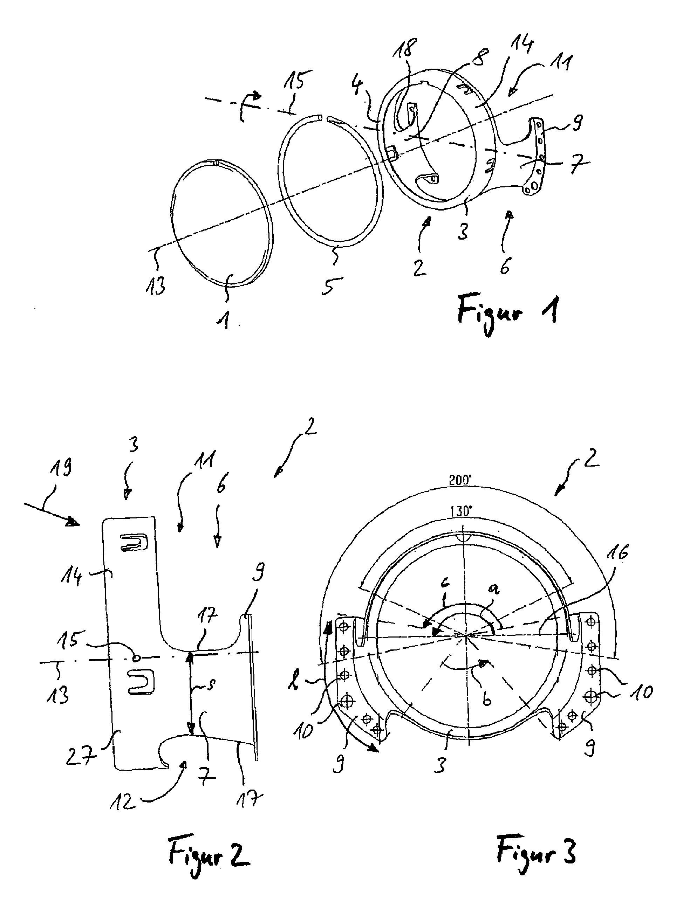

Zur Verbesserung des Fußgängerschutzes weist der erfindungsgemäße Projektionsscheinwerfer einen Linsenhalter 2 entsprechend einer ersten Ausführungsform gemäß den Figuren 1 bis 3 auf. Der Linsenhalter 2 enthält zum einen einen ringförmigen Halterahmen 3, der an einer Vorderseite einen radialen Ringabschnitt 4 aufweist, mittels dessen die Linse 1 über einen Sprengring 5 gehalten ist.

Zum anderen weist der Linsenhalter eine Abstandshalteeinrichtung 6 auf zur Anbindung beispielsweise an einen rückseitig angeordneten Reflektor oder an ein anderes Bauteil eines nicht dargestellten Gehäuses des Projektionsscheinwerfers. Die Abstandshalteeinrichtung 6 umfasst einen ersten Abstandshaltearm 7 und einen zweiten Abstandshaltearm 8, die gegenüberliegend angeordnet sind und jeweils einstückig mit dem Halterahmen 3 verbunden sind. Auf einer dem Halterahmen 3 abgewandten Seite des ersten Abstandshaltearmes 7 und des zweiten Abstandshaltearmes 8 weisen dieselben jeweils einen Befestigungsflansch 9 auf, der über Bohrungen 10 verfügt zur Befestigung an dem rückseitigen Bauteil (Reflektor).

Der erste Abstandshaltearm 7 und der zweite Abstandshaltearm 8 begrenzen eine obere Freimachung 11, die sich entlang eines oberen Öffnungswinkelbereiches a erstreckt, und eine untere Freimachung 12, die sich entlang eines unteren Öffnungswinkelbereiches b erstreckt. Wie besser aus Figur 3 zu ersehen ist, erstreckt sich der in vertikaler Richtung und senkrecht zu einer optischen Achse 13 der Linse 1 verlaufende obere Öffnungswinkelbereich a über einen Winkel von etwa 180°. Vorzugsweise kann der Öffnungswinkelbereich a in einem Bereich von mindestens 130° und maximal 200° liegen, wie es in Figur 3 dargestellt ist.

Durch die hierdurch geschaffene Aussparung in einem Bereich hinter dem Halterahmen 3 kann einer Stoßbeanspruchung insbesondere aus einer vorderen und in einem spitzen Winkel zu der optischen Achse 13 von oben ausgehenden Stoßrichtung 19 eine Stoßenergieaufnahme durch gezieltes Verschwenken eines oberen Abschnittes 14 des Halterahmens 3 um einen Verschwenkachse 15 erfolgen. Die Stoßenergieaufnahme bei einem solchen Aufprall erfolgt in gestufter Weise. In einer ersten Stufe wird bei Erreichen einer vorgegebenen Stoßkraft die Linse 1 selbsttätig aus dem Halterahmen 3 entfernt und in den rückwärtigen Raum gedrückt. In einer zweiten Stufe, die vorzugsweise gleichzeitig mit dem Herauslösen der Linse 1 aus dem Halterahmen 3 erfolgen kann, erfolgt ein Verbiegen des oberen Abschnitts 14 des Halterahmens 3 nach hinten. Hierdurch wird eine gezielte und homogene Stoßenergieabsorption gewährleistet.

Wie aus Figur 3 zu ersehen ist, erstreckt sich die obere Freimachung 11 oberhalb einer horizontalen Mittelebene 16 der Linse 1, die untere Freimachung 12 erstreckt sich unterhalb der horizontalen Mittelebene 16. Die untere Freimachung 12 erstreckt sich in einem Öffnungswinkelbereich b, der kleiner ist als der obere Öffnungswinkelbereich a der oberen Freimachung 11. Der untere Öffnungswinkelbereich b erstreckt sich in einem spitzen oder stumpfen Winkelbereich.

Der erste Abstandshaltearm 7 und der zweite Abstandshaltearm 8 erstrecken sich im Wesentlichen unterhalb der horizontalen Mittelebene 16, so dass bei einer Stoßbeanspruchung 19 eine gezielte Schwenkbewegung des oberen Abschnitts 14 des Halterahmens 3 gewährleistet ist.

Der erste Abstandshaltearm 7 und der zweite Abstandshaltearm 8 weisen eine konkavförmige Randkontur 17 bzw. 18 auf. Die Breite s des ersten Abstandshaltearms 7 und des zweiten Abstandshaltearms 8 ist kleiner als die Länge I der Befestigungsflansche 9. Folglich ist ein Öffnungswinkel c der oberen Freimachung 11 im Bereich der Befestigungsflansche 9 der Abstandshalteeinrichtung 6 kleiner als der Öffnungswinkelbereich a, der sich in einem zwischen dem Befestigungsflansch 9 und dem Halterahmen 3 liegenden Bereich erstreckt.

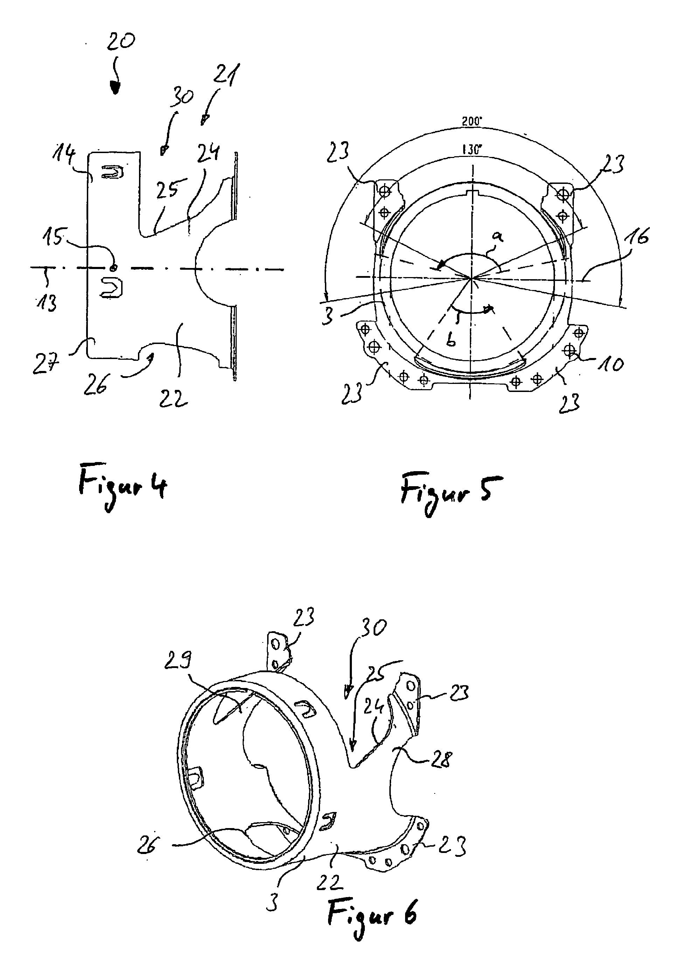

Nach einer zweiten Ausführungsform eines Linsenhalters 20 gemäß den Figuren 4 und 5 ist im Unterschied zu der vorhergehenden Ausführungsform eine Abstandshalteeinrichtung 21 mit einem einzigen unteren Abstandshaltearm 22 vorgesehen. Der Abstandshaltearm 22 erstreckt sich im Wesentlichen unterhalb der horizontalen Mittelebene 16 und weist auf einer dem Halterahmen 3 abgewandten Seite einen unterbrochenen Befestigungsflansch 23 auf. Gleiche Bauteile der Ausführungsbeispiele sind mit gleichen Bezugsziffern versehen.

Eine obere Randkontur 24 des Abstandshaltearmes 22 weist auf einer dem Halterahmen 3 zugewandten Seite einen Einschnitt 25 auf, der die gewünschte Kippbewegung des oberen Abschnitts 14 des Halterahmens 3 begünstigt.

In einem unteren Bereich des Abstandshaltearmes 22 ist eine Aussparung 26 vorgesehen, so dass die Steifigkeit des Halterahmens 3 in einem unteren Abschnitt 27 des Halterahmens 3 verringert ist.

Dadurch, dass der Abstandshaltearm 22 zwei oberhalb der horizontalen Mittelebene 16 verlaufende Haltearmabschnitte 28, 29 aufweist, wird zum einen eine Anbindung des Halterahmens 3 an den rückseitigen Reflektor oberhalb der horizontalen Mittelebene 16 gewährleistet. Zum anderen ergibt sich hierdurch eine geringere Steifigkeit der Abstandshalteeinrichtung 21 oberhalb der horizontalen Mittelebene 16, so dass bei Stoßbeanspruchung von vorne ein gezieltes Kippen des oberen Abschnittes 14 des Halterahmens 3 nach hinten um die Verschwenkachse gewährleistet ist. Die durch die obere Randkontur 24 des Abstandshaltearmes 22 begrenzte Freimachung 30 kann sich wie im vorhergehenden Ausführungsbeispiel in einem Öffnungswinkelbereich a' von 130° bis 200° erstrecken. Im vorliegenden zweiten Ausführungsbeispiel erstreckt sich der Öffnungswinkelbereich a entlang eines Winkels von etwa 150°.

Die untere Aussparung 26 kann genauso wie die untere Freimachung 12 der Abstandshalteeinrichtung 6 in einem stumpfen Öffnungswinkelbereich b liegen.

Der erfindungsgemäße Linsenhalter 2, 20 ermöglicht eine weitgehende Designfreiheit bei der Anbringung zusätzlicher, die Linse 1 bzw. den Linsenhalter 2, 20 in Umfangsrichtung abdeckender Zierblenden. Der Linsenhalter 2, 20 ist vorzugsweise aus einem Metallwerkstoff hergestellt. Die Zierblende ist vorzugsweise aus einem elastischen Werkstoff, vorzugsweise aus einem Kunststoffmaterial hergestellt.

## Patentansprüche

1. Projektionsscheinwerfer für Fahrzeuge mit einem Reflektor, mit einer dem Reflektor zugeordneten Lichtquelle, mit einer dem Reflektor in Abstrahlrichtung vorgelagerten Linse (1), mit einer zwischen der Lichtquelle und der Linse angeordneten und die Hell/Dunkel-Grenze erzeugenden Blende und mit einem die Linse tragenden Linsenhalter (2) enthaltend einen die Linse in Umfangsrichtung umgebenden Halterahmen (3) und mindestens eine in Richtung des Reflektors weisende, von dem Halterahmen abragende Abstandshalteeinrichtung (6), **dadurch gekennzeichnet, dass** die Abstandshalteeinrichtung (6, 21) in einem vorgegebenen oberen Öffnungswinkelbereich (a) eine obere Freimachung (11, 30) aufweist, derart, dass der Halterahmen (3) bei einer Stoßbeanspruchung oberhalb der optischen Asche (13) aus einer vorderen, in einem spitzen Winkel zur optischen Achse (13) stehenden Stoßrichtung (19) im Wesentlichen in Verlängerung der Stoßrichtung (19) verformt wird.

2. Projektionsscheinwerfer nach Anspruch 1, **dadurch gekennzeichnet, dass** sich die obere Freimachung (11, 30) zumindest in einem stumpfen Öffnungswinkelbereich (a) erstreckt, der vertikal und oberhalb einer horizontalen Mittelebene (16) der Linse (1) verläuft.

3. Projektionsscheinwerfer nach Anspruch 1 oder 2, **dadurch gekennzeichnet, dass** sich die obere Freimachung (11, 30) in einem Öffnungswinkelbereich von mindestens 130° und maximal 200° erstreckt.

4. Projektionsscheinwerfer nach einem der Ansprüche 1 bis 3, **dadurch gekennzeichnet, dass** die Abstandshalteeinrichtung (6) in einem unteren Öffnungswinkelbereich (b) eine untere Freimachung (12) aufweist, wobei die untere Freimachung (12) und die obere Freimachung (11) jeweils von einem ersten Abstandshaltearm (7) und einem zweiten Abstandshaltearm (8) begrenzt sind.

5. Projektionsscheinwerfer nach Anspruch 4, **dadurch gekennzeichnet, dass** die untere Freimachung (12) in einem spitzen oder stumpfen unteren Öffnungswinkelbereich (b) verläuft.

6. Projektionsscheinwerfer nach Anspruch 4 oder 5, **dadurch gekennzeichnet, dass** der erste Abstandshaltearm (7) und der zweite Abstandshaltearm (8) jeweils im Wesentlichen unterhalb der horizontalen Mittelebene (16) verlaufen.

7. Projektionsscheinwerfer nach einem der Ansprüche 1 bis 6, **dadurch gekennzeichnet, dass** eine obere Randkontur (17, 18, 24) des ersten Abstandshaltearmes (7) und/oder des zweiten Abstandshaltearmes (8) oder des unteren Abstandshaltearmes (22) konkavförmig verläuft.

8. Projektionsscheinwerfer nach einem der Ansprüche 1 bis 7, **dadurch gekennzeichnet, dass** die Abstandshalteeinrichtung (6, 21) auf einer dem Halterahmen (3) abgewandten Seite einen Befestigungsflansch (9) aufweist zur Befestigung an einem rückwärtigen Bauteil.

9. Projektionsscheinwerfer nach einem der Ansprüche 1 bis 8, **dadurch gekennzeichnet, dass** der obere Öffnungswinkel (a) der oberen Freimachung (11, 30) gleich oder größer ist ein Öffnungswinkel (c) des rückseitig versetzt angeordneten Befestigungsflansches (9).

10. Projektionsscheinwerfer nach einem der Ansprüche 1 bis 9, **dadurch gekennzeichnet, dass** die Linse (1) mittels eines Sprengrings (5) in dem Halterahmen (3) gelagert ist, so dass bei Erreichen einer vorgegebenen Stoßkraft die Linse (1) selbsttätig aus dem Halterahmen (3) herausbewegt wird.

## Claims

1. Projection headlamp for vehicles containing a reflector, a light source allocated to the reflector, a lens (1) located before the reflector in the direction of light emission, a cover located between the light source and the lens such that the cover provides the cut-off line, and a lens holder (2) holding the lens, comprising a holding frame (3) around the circumference of the lens and at least one spacer element (6) which points in the direction of the reflector and protrudes from the holding frame, **characterized in that** the spacer element (6, 21) has an upper recess (11, 30) in a set upper range of aperture angles (a) such that an impact acting upon the holding frame (3) above the optical axis (13) and coming from a direction ahead (19) at an acute angle to the optical axis (13) will mainly deform the holding frame (3) in the direction extending the direction of impact (19).

2. Projection headlamp of claim 1, **characterized in that** the upper recess (11, 30) cuts through at least a range of obtuse aperture angles (a) which is vertical to and above a horizontal mid plane (16) of the lens (1).

3. Projection headlamp of claim 1 or 2, **characterized in that** the upper recess (11, 30) cuts through a range of aperture angles of a minimum of 130° and a maximum of 200°.

4. Projection headlamp of claims 1 to 3, **characterized in that** the spacer element (6) has a bottom recess (12) in a bottom range of aperture angles (b), where both the bottom recess (12) and the upper recess (11) ends in a first spacer arm (7) and a second spacer arm (8).

5. Projection headlamp of claim 4, **characterized in that** the bottom recess (12) cuts through either an acute or an obtuse bottom range of aperture angles (b).

6. Projection headlamp of claim 4 or 5, **characterized in that** both the first spacer arm (7) and the second spacer arm (8) mainly extend below the horizontal mid plane (16).

7. Projection headlamp of claims 1 to 6, **characterized in that** an upper contoured edge (17, 18, 24) of the first spacer arm (7) and/or of the second spacer arm (8) or of the bottom spacer arm (22) has a concave shape.

8. Projection headlamp of claims 1 to 7, **characterized in that** the spacer element (6, 21) has a flange (9) on a side facing away from the holding frame (3) to attach the spacer element (6, 21) to a component behind.

9. Projection headlamp of claims 1 to 8, **characterized in that** the upper aperture angle (a) of the upper recess (11, 30) is equal to or greater than an aperture angle (c) of the flange (9) located at an offset at its back.

10. Projection headlamp of claims 1 to 9, **characterized in that** the lens (1) is held in the holding frame (3) by a retaining ring (5) such that the lens (1) automatically snaps out of the holding frame (3) when the impact force equals a set limit.

## Revendications

1. Projecteur de projection pour véhicules avec un réflecteur, avec une source lumineuse affectée au réflecteur, avec une lentille (1) placée devant le réflecteur dans le sens de rayonnement, avec un occulteur disposé entre la source lumineuse et la lentille et générant la coupure clair-obscur et avec un support de lentille (2) supportant la lentille comprenant un cadre de maintien (3) entourant la lentille dans le sens périphérique et au moins un dispositif de maintien de distance (6) tourné en direction du réflecteur et dépassant du cadre de maintien, **caractérisé en ce que** le dispositif de maintien de distance (6, 21) présente un évidement supérieur (11, 30) dans une zone angulaire d'ouverture supérieure prédéfinie (a), de telle sorte que le cadre de maintien (3) est, dans le cas de contraintes dues au choc au-dessus de l'axe optique (13), est déformé à partir d'un sens de choc (19) avant, situé à un angle pointu par rapport à l'axe optique (13), essentiellement dans le prolongement du sens de choc (19).

2. Projecteur de projection selon la revendication 1, **caractérisé en ce que** l'évidement supérieur (11, 30) s'étend au moins dans une zone angulaire d'ouverture obtuse (a) qui s'étend verticalement et au-dessus d'un plan médian horizontal (16) de la lentille (1).

3. Projecteur de projection selon la revendication 1 ou 2, **caractérisé en ce que** l'évidement supérieur (11, 30) s'étend dans une zone angulaire d'ouverture d'au moins 130° et de 200° maximum.

4. Projecteur de projection selon l'une des revendications 1 à 3, **caractérisé en ce que** le dispositif de maintien de distance (6) présente un évidement inférieur (12) dans une zone angulaire d'ouverture inférieure (b), l'évidement inférieur (12) et l'évidement supérieur (11) étant chacun délimités par un premier bras de maintien de distance (7) et un deuxième bras de maintien de distance (8).

5. Projecteur de projection selon la revendication 4, **caractérisé en ce que** l'évidement inférieur (12) s'étend dans une zone angulaire d'ouverture inférieure (b) pointue ou obtuse.

6. Projecteur de projection selon la revendication 4 ou 5, **caractérisé en ce que** le premier bras de maintien de distance (7) et le deuxième bras de maintien de distance (8) s'étendent chacun essentiellement au-dessous du plan médian horizontal (16).

7. Projecteur de projection selon l'une des revendications 1 à 6, **caractérisé en ce qu'**un contour de bord supérieur (17, 18, 24) du premier bras de maintien de distance (7) et/ou du deuxième bras de maintien de distance (8) ou du bras de maintien de distance inférieur (22) s'étend en forme concave.

8. Projecteur de projection selon l'une des revendications 1 à 7, **caractérisé en ce que** le dispositif de maintien de distance (6, 21) présente, sur un côté opposé au cadre de maintien (3), une bride de fixation (9) permettant la fixation à un composant arrière.

9. Projecteur de projection selon l'une des revendications 1 à 8, **caractérisé en ce que** l'angle de fixation supérieur (a) de l'évidement supérieur (11, 30) est supérieur ou égal à l'angle d'ouverture (c) de la bride de fixation (9) disposé en décalage à l'arrière.

10. Projecteur de projection selon l'une des revendications 1 à 9, **caractérisé en ce que** la lentille (1) est logée dans le cadre de maintien (3) à l'aide d'une bague élastique (5), si bien que lorsqu'une force de choc prédéfinie est atteinte, la lentille (1) est automatiquement sortie du cadre de maintien (3).
